# EUROPÄISCHE PATENTSCHRIFT

(11) **EP 4 019 191 B1**
(45) Veröffentlichungstag und Bekanntmachung des Hinweises auf die Patenterteilung: **09.10.2024**
(21) Anmeldenummer: 21151366.8
(22) Anmeldetag: 13.01.2021
(51) Int. Cl.: B25B 23/14, G05B 19/409

(54) **VERFAHREN ZUM VERWALTEN VON ZUSATZFUNKTIONEN EINES WERKZEUGS, WERKZEUG, COMPUTERPROGRAMMPRODUKT UND SYSTEM ZUR VERWALTUNG VON ZUSATZFUNKTIONEN EINES WERKZEUGS**
METHOD FOR MANAGING SUPPLEMENTARY FUNCTIONS OF A TOOL, TOOL, COMPUTER PROGRAM PRODUCT AND SYSTEM FOR MANAGING ADDITIONAL FUNCTIONS OF A TOOL
PROCÉDÉ DE GESTION DES FONCTIONS SUPPLÉMENTAIRES D'UN OUTIL, OUTIL, PRODUIT PROGRAMME INFORMATIQUE ET SYSTÈME DE GESTION DES FONCTIONS SUPPLÉMENTAIRES D'UN OUTIL

(30) Priorität: 22.12.2020 DE 102020134764
(43) Veröffentlichungstag der Anmeldung: 29.06.2022
(73) Patentinhaber: Hoffmann Engineering Services GmbH, 81241 München (DE)
(72) Erfinder: ROSSAINT, Jens, Krailling 82152 (DE); MEHLICH, Jens, Weitramsdorf 96479 (DE); KÜNSTLER, Marko, 80634 München (DE); WAGNER, Christian, 85232 Bergkirchen (DE)
(74) Vertreter: Seemann & Partner Patentanwälte mbB

(56) Entgegenhaltungen:
- DE-A1- 102017 204 150
- US-A1- 2016 119 055
- US-A1- 2018 333 831
- US-A1- 2019 299 375

## Beschreibung

Die Erfindung betrifft ein Verfahren zum Verwalten von Zusatzfunktionen eines Werkzeugs, ein Werkzeug, ein Computerprogrammprodukt und ein System zur Verwaltung von Zusatzfunktionen eines Werkzeugs.

Werkzeuge haben vielfach neben ihrer Hauptfunktion noch eine Reihe Zusatzfunktionen, welche die Arbeit mit dem Werkzeug erleichtern und die Einsatzmöglichkeiten des Werkzeugs vergrößern. Derartige Zusatzfunktionen bestehen zum Beispiel in der Anzeige eines zusätzlichen Messwerts, in der Zurverfügungstellung von zusätzlichen Auswertefunktionen oder weiteren Konnektivitätsoptionen.

Da unterschiedliche Nutzer verschiedene Anforderungen an ihre Werkzeuge haben, bieten die Hersteller vielfach verschiedene Werkzeugmodelle an, die sich im Umfang der verfügbaren Zusatzfunktionen unterscheiden. Allerdings erfordert dies die Produktion und Lagerung von vielen verschiedenen Modellen eines Werkzeugs, was zu erhöhten Produktions- und Lagerkosten führt.

Aus diesem Grund stellen Hersteller vielfach Werkzeuge her, die zwar grundsätzlich mit allen Zusatzfunktionen ausgestattet sind, bei denen jedoch je nach Modell eine Anzahl der Zusatzfunktionen deaktiviert ist. Dadurch ist es möglich, lediglich eine Art von Werkzeug herzustellen und auf Lager zu halten, aber trotzdem verschiedene Modelle mit unterschiedlichem Funktionsumfang anzubieten.

In EP 2 139 644 B1 ist ein elektronischer Drehmomentschlüssel offenbart, der mit einer Vielzahl von Funktionen ausgestattet ist, die sich selektiv aktivieren lassen, indem eine Speicherkarte des Drehmomentschlüssels ausgetauscht wird. Die Speicherkarten werden von dem Hersteller oder einem Fachverkäufer mit den benötigten Zusatzfunktionen programmiert und anschließend in den Drehmomentschlüssel eingesetzt, um die auf der Speicherkarte festgelegten Zusatzfunktionen zu aktivieren.

DE 10 2017 204 150 A1 zeigt ein Werkzeugsystem für das Freischalten/Verwalten von Werkzeugen und/oder Werkzeugzubehör durch einen Benutzer. Dem Werkzeug ist ein von dem Benutzer erfassbarer Code zugeordnet, der von einer zentralen Verwaltung zur Freischaltung des Werkzeugs verifizierbar ist.

US 2018/0333831 A1 offenbart einen drahtlosen Drehmomentschlüssel, der mittels eines mobilen Datenverarbeitungsgeräts automatisch auf ein bestimmtes Fahrzeug einstellbar ist.

In US 2019/0299375 A1 ist ein System offenbart, das eine Mehrzahl von Drehmomentschlüsseln umfasst. Über Nahfeldkommunikationsmodule tauschen die Drehmomentschlüssel Informationen mit einer zentralen Verwaltungseinheit aus.

In US 2016/0119055 A1 ist ein Messwertübermittlungssystem offenbart, das dazu eingerichtet ist, Messwerte drahtlos von einem handgeführten Messwerkzeug an ein separates System zu übertragen.

Die Aufgabe der Erfindung besteht darin, ein Verfahren und ein System zum Verwalten von Zusatzfunktionen eines Werkzeugs sowie ein Werkzeug und ein Computerprogrammprodukt anzugeben, mittels denen eine einfach zu handhabende, sichere und kosteneffiziente Möglichkeit zum Aktivieren, und insbesondere Deaktivieren, von Zusatzfunktionen eines Werkzeugs erreicht wird.

Diese Aufgabe wird gelöst durch ein Verfahren zum Verwalten von Zusatzfunktionen eines Werkzeugs, umfassend die folgenden Verfahrensschritte:
- Auswahl wenigstens einer deaktivierten Zusatzfunktion des Werkzeugs und Ermitteln wenigstens eines Funktionskennzeichens, das der wenigstens einen deaktivierten Zusatzfunktion zugeordnet ist,
- Ermitteln eines das Werkzeug individuell und eineindeutig bestimmenden Werkzeugkennzeichens,
- Übermitteln des Werkzeugkennzeichens und des wenigstens einen Funktionskennzeichens an eine Funktionsverwaltungsvorrichtung,
- Übermitteln eines Aktivierungsdatensatzes von der Funktionsverwaltungsvorrichtung an das Werkzeug,
- Aktivieren der wenigstens einen deaktivierten Zusatzfunktion auf dem Werkzeug mittels des Aktivierungsdatensatzes,
wobei der Aktivierungsdatensatz hinsichtlich des Werkzeugs individualisiert ist, so dass die wenigstens eine Zusatzfunktion mittels des Aktivierungsdatensatzes ausschließlich auf dem Werkzeug aktivierbar ist, das dem Werkzeugkennzeichen eineindeutig zugeordnet ist.

Da das Werkzeugkennzeichen das Werkzeug individuell und eineindeutig bestimmt, haben selbst Werkzeuge desselben Werkzeugmodells unterschiedliche Werkzeugkennzeichen. Jedes Werkzeugkennzeichen ist also nur genau einmal für ein einzelnes Werkzeug vergeben.

Vorteilhaft wird auf diese Weise sichergestellt, dass der Aktivierungsdatensatz tatsächlich nur zur Aktivierung der Zusatzfunktionen dieses Werkzeugs Anwendung findet. Der Aktivierungsdatensatz kann somit, selbst wenn er kopiert wird, nicht zur Aktivierung von Zusatzfunktionen anderer Werkzeuge verwendet werden. Es wird verhindert, dass sich ein Nutzer unbefugt Zugriff auf nicht erworbene Zusatzfunktionen auf anderen Werkzeugen verschafft oder die anderen Werkzeuge durch unsachgemäße Umprogrammierung mittels unpassender Aktivierungsdatensätze sogar beschädigt.

Der Aktivierungsdatensatz wird nur übermittelt, wenn sowohl das wenigstens eine Funktionskennzeichen als auch das Werkzeugkennzeichen an die Funktionsverwaltungsvorrichtung übermittelt wurden. Auf diese Weise wird sichergestellt, dass vor Übermittlung des Aktivierungsdatensatzes feststeht, welche Zusatzfunktionen auf welchem Werkzeug aktiviert werden sollen. Das Funktionskennzeichnen ist beispielsweise ein Name der zu aktivierenden Zusatzfunktion. Bei Werkzeugen, die nur eine einzelne aktivierbare Zusatzfunktion umfassen, ist es nicht notwendig, den Namen der Zusatzfunktion zu übermitteln. Stattdessen ist das Funktionskennzeichnen in diesem Fall beispielsweise eine Mitteilung, dass die eine aktivierbare Zusatzfunktion aktiviert werden soll. Es wird beispielsweise eine Liste mit den Namen von mehreren Zusatzfunktionen an die Funktionsverwaltungsvorrichtung übermittelt, die angeben, welche Zusatzfunktionen aktiviert werden sollen. Insbesondere werden das Werkzeugkennzeichen, das wenigstens eine Funktionskennzeichen und/oder der Aktivierungsdatensatz mittels verschlüsselter Kommunikation übermittelt. Auf diese Weise wird erreicht, dass die übermittelten Daten nicht ausgelesen und/oder manipuliert werden. Insbesondere erfolgt die Verschlüsselung des Aktvierungsdatensatzes vor dem Übermitteln des Aktvierungsdatensatzes und/oder die Entschlüsselung des Aktivierungsdatensatzes durch das Werkzeug.

Insbesondere übermittelt die Funktionsverwaltungsvorrichtung den Aktivierungsdatensatz nur dann an das Werkzeug, wenn die Funktionsverwaltungsvorrichtung eine Freischaltberechtigung für das Werkzeug bezüglich der wenigstens einen Zusatzfunktion aufweist.

Die Freischaltberechtigung ist insbesondere eine Lizenz. Die Lizenz wird beispielsweise gegen eine Geldzahlung erworben. Der Nutzer kann also zum Beispiel weitere Zusatzfunktionen für sein Werkzeug erwerben und diese mittels des beschriebenen Verfahrens aktivieren.

Die Zusatzfunktionen des Werkzeugs umfassen insbesondere zusätzliche Messfunktionen, die Anzeige eines zusätzlichen Messwerts, das Auslesen eines zusätzlichen Sensorsignals, zusätzliche Konnektivitätsoptionen, eine Speicherplatzfreigabe für eine Datenspeicherung, einen zusätzlichen Leistungsbereich des Werkzeugs, beispielsweise eine Erweiterung eines Messbereichs oder einer Erhöhung der Strombegrenzung eines Motors, zusätzliche Auswertefunktionen, beispielsweise die Anzeige von Statistiken und Diagrammen, zusätzliche Überwachungsfunktionen, beispielsweise die Anzeige von Toleranzbereichen und Überwachungskurven, und/oder die Ausgabe von Signalen, beispielsweise akustischer, optischer und/oder haptischer Signale mittels insbesondere Lautsprecher, LEDs und/oder Vibrationselementen. Insbesondere wird mittels des Verfahrens eine Kombination dieser Zusatzfunktionen aktiviert.

Gemäß einer Ausführungsform werden das Werkzeugkennzeichen und/oder das Funktionskennzeichen direkt an der Funktionsverwaltungsvorrichtung eingegeben. Gemäß einer anderen Ausführungsform werden das Werkzeugkennzeichen und/oder das Funktionskennzeichen über eine Datenverbindung von dem Werkzeug an die Funktionsverwaltungsvorrichtung übermittelt. Gemäß einer weiteren Ausführungsform werden das Werkzeugkennzeichen und das Funktionskennzeichen an einer dritten Vorrichtung, beispielsweise einem Personalcomputer, eingegeben und von dort an die Funktionsverwaltungsvorrichtung übermittelt.

Vorzugsweise ist das Werkzeugkennzeichen eine Seriennummer des Werkzeugs.

Die Seriennummer ist eine für den Nutzer leicht ersichtliche Information, die zudem das Werkzeug eindeutig identifiziert. Vorteilhaft ist das Verfahren unter Nutzung der Seriennummer für einen Nutzer sehr einfach auszuführen, da die Seriennummer deutlich leichter zugänglich ist als beispielsweise eine MAC-Adresse eines elektronischen Geräts. Insbesondere gibt der Nutzer beim Erwerb von weiteren Zusatzfunktionen die Seriennummer seines Werkzeugs an, so dass der Aktivierungsdatensatz nur für dieses Werkzeug funktioniert. Es ist nicht notwendig, dass eine geschulte Person das Werkzeug oder eine Speicherkarte des Werkzeugs mit den Zusatzfunktionen programmiert. Durch die Individualisierung mittels der Seriennummer wird sichergestellt ist, dass die angeforderten Zusatzfunktionen tatsächlich nur auf dem Werkzeug aktivierbar sind, das der Seriennummer zugeordnet ist.

Bevorzugt wird der Aktivierungsdatensatz drahtgebunden und/oder drahtlos an das Werkzeug übermittelt.

Der Aktivierungsdatensatz wird insbesondere drahtgebunden mittels eines Universal Serial Bus (USB) oder drahtlos mittels eines Mobilgeräts, beispielsweise über Bluetooth, übermittelt. Gemäß einer Ausführungsform wird der Aktivierungsdatensatz von der Funktionsverwaltungsvorrichtung über eine oder mehrere Zwischenstationen an das Werkzeug übermittelt. In diesem Fall erfolgt die Übermittlung insbesondere über einige Teilstrecken drahtlos und über andere Teilstrecken drahtgebunden.

Vorzugsweise sind mittels der Funktionsverwaltungsvorrichtung die Zusatzfunktionen des Werkzeugs separat deaktivierbar und/oder aktivierbar.

Vorteilhaft lässt sich ein Aktivierungsstatus der Zusatzfunktionen auf diese Weise einfach und schnell mittels der Funktionsverwaltungsvorrichtung verwalten. Die Aktivierung von Zusatzfunktionen erfordert insbesondere den Erwerb einer Lizenz für diese Zusatzfunktion. Insbesondere lässt sich die Lizenz mittels der Funktionsverwaltungsvorrichtung erwerben.

Die Funktionsverwaltungsvorrichtung ist vorzugsweise ein externes Mobilgerät, insbesondere ein Mobiltelefon oder ein externer, stationärer Computer.

Extern bedeutet, dass das Mobilgerät bzw. der Computer separat zu dem Werkzeug ausgebildet ist. Die Ausgestaltung der Funktionsverwaltungsvorrichtung als externes Mobilgerät ermöglicht eine besonders einfache und komfortable Verwaltung der Zusatzfunktionen des Werkzeugs. Das externe Mobilgerät ist beispielsweise ein Mobiltelefon, ein Tabletcomputer oder ein Notebook. Insbesondere weist das externe Mobilgerät einen Verwaltungsmodus auf, mittels dem die Zusatzfunktionen des Werkzeugs verwaltbar sind. Beispielsweise sind die Zusatzfunktionen mittels einer App, die auf dem externen Mobilgerät installiert ist, aktivierbar und/oder deaktivierbar.

Gemäß einer Ausführungsform ist die Funktionsverwaltungsvorrichtung in der Cloud ausgebildet. Beispielsweise kauft ein Nutzer eine Lizenz in einem Onlineshop. Die Lizenz wird daraufhin zum Beispiel in einer Messgeräteverwaltung in der Cloud abgelegt und der Aktivierungsdatensatz wird in der Messgeräteverwaltung durch den Verkäufer und/oder Hersteller des Werkzeugs verschlüsselt abgelegt. Der Nutzer ist beispielsweise mittels eines Mobiltelefons und einem gesicherten Zugang in der Cloud angemeldet. Der Aktivierungsdatensatz wird beispielsweise von dem Mobiltelefon verschlüsselt abgerufen und an das Werkzeug übermittelt. Anschließend wird der Aktivierungsdatensatz beispielsweise im Werkzeug entschlüsselt und die wenigstens eine Zusatzfunktion aktiviert.

Mittels eines externen, stationären Computers, beispielsweise einem PC, lassen sich die Zusatzfunktionen komfortabel verwalten, da stationäre Computer zumeist über eine größere Rechenleistung verfügen und mit einem größeren Display verbunden sind als externe Mobilgeräte. Der externe stationäre Computer umfasst insbesondere eine Schnittstelle zur drahtgebundenen und/oder drahtlosen Kommunikation mit dem Werkzeug. Beispielsweise ist die Schnittstelle ein USB-Anschluss oder eine Bluetooth-Schnittstelle.

Vorzugsweise ist wenigstens eine der Zusatzfunktionen nur nutzbar, nachdem eine Berechtigungsdatenverbindung zwischen der Funktionsverwaltungsvorrichtung und dem Werkzeug hergestellt wurde.

Vorteilhaft wird auf diese Weise erreicht, dass bestimmte Zusatzfunktionen nur dann nutzbar sind, wenn diese von einem Nutzer der Funktionsverwaltungsvorrichtung, beispielsweise des externen Mobilgeräts, freigegeben wurden. Der Nutzer des externen Mobilgeräts ist beispielsweise ein Meister eines Handwerksbetriebs, der potentiell gefährliche Zusatzfunktionen freigeben muss. Gemäß einer Ausführungsform ist die wenigstens eine Zusatzfunktion nur solange nutzbar, wie die Berechtigungsdatenverbindung aufrechterhalten wird. Gemäß einer alternativen Ausführungsform bleibt die wenigstens eine Zusatzfunktion nutzbar, auch nachdem die Berechtigungsdatenverbindung beendet wurde.

Bevorzugt wird zwischen der Funktionsverwaltungsvorrichtung und dem Werkzeug eine Kontrolldatenverbindung aufgebaut und aufrechterhalten, solange sich die Funktionsverwaltungsvorrichtung innerhalb eines, insbesondere vorgebbaren, Abstands von dem Werkzeug befindet, wobei in regelmäßigen Intervallen über die Kontrolldatenverbindung ein Kontrollsignal an das Werkzeug übermittelt wird, wobei die wenigstens eine Zusatzfunktion, die aktiviert wurde, deaktiviert wird, sofern innerhalb eines vorgebbaren Kontrollzeitraums kein Kontrollsignal an das Werkzeug übermittelt wurde.

Vorteilhaft wird durch die Kontrolldatenverbindung sichergestellt, dass die wenigstens eine Zusatzfunktion des Werkzeugs, die aktiviert wurde, nur aktiviert bleibt, solange sich das Werkzeug in dem vorgebbaren Abstand um die Funktionsverwaltungsvorrichtung, beispielsweise das externe Mobilgerät, befindet. Auf diese Weise ist es möglich, die Zusatzfunktion beispielsweise für einen einzelnen Betrieb freizuschalten. Dieser Betrieb verfügt zum Beispiel über ein externes Mobilgerät oder einen stationären Computer zum Verwalten der Zusatzfunktionen der Werkzeuge des Betriebs. Verlässt das Werkzeug den Betrieb, beispielsweise, weil es aussortiert, verkauft oder gestohlen wurde, so verlässt es auch den vorgebbaren Abstand um das externe Mobilgerät bzw. den stationären Computer, so dass die Zusatzfunktionen nicht länger nutzbar sind. Der Kontrollzeitraum ist insbesondere größer als das regelmäßige Intervall, in dem das Kontrollsignal übermittelt wird.

Vorzugsweise werden mittels einer einzigen Funktionsverwaltungsvorrichtung Zusatzfunktionen von mehreren Werkzeugen verwaltet.

Dies erlaubt vorteilhaft die Verwaltung von einer Vielzahl von Werkzeugen eines Betriebs mittels einer einzigen Funktionsverwaltungsvorrichtung, beispielsweise eines Mobiltelefons eines Meisters.

Der Aktivierungsdatensatz beinhaltet vorzugsweise eine Aktivierungsdauer, wobei die wenigstens eine Zusatzfunktion, die aktiviert wurde, nach Ablauf der Aktivierungsdauer deaktiviert wird.

Auf diese Weise ist es möglich, für die wenigstens eine Zusatzfunktion eine zeitlich begrenzte Lizenz anzubieten.

Unter Werkzeug im Rahmen der Erfindung sind insbesondere Messmittel, wie beispielsweise Bügelmessschrauben, Messschieber, Messuhren, Rauheitsmessgeräte, elektronische Drehmomentschlüssel und ähnliche Werkzeuge sowie Schraubwerkzeuge und andere Arten von Werkzeugen zu verstehen.

Das Werkzeug ist vorzugsweise ein handgeführtes elektronisches Messmittel, insbesondere ein elektronischer Drehmomentschlüssel und/oder eine Bügelmessschraube und/oder ein Messschieber und/oder eine Messuhr und/oder ein Rauheitsmessgerät.

Die Aufgabe wird zudem gelöst durch ein Werkzeug, das dazu ausgebildet und eingerichtet ist, die von dem Werkzeug ausgeführten Verfahrensschritte des Verfahrens nach einem der zuvor genannten Ausführungsformen auszuführen.

Das Werkzeug verkörpert die gleichen Vorteile, Merkmale und Eigenschaften wie das zuvor beschriebene Verfahren zum Verwalten von Zusatzfunktionen eines Werkzeugs.

Die Aufgabe wird weiterhin gelöst durch ein Computerprogrammprodukt, umfassend Befehle, die bei der Ausführung des Computerprogrammprodukts eine Datenverarbeitungsvorrichtung dazu veranlassen, das Verfahren nach einem der zuvor beschriebenen Ausführungsformen auszuführen.

Das Computerprogrammprodukt verkörpert die gleichen Vorteile, Merkmale und Eigenschaften wie das zuvor beschriebene Werkzeug sowie das zuvor beschriebene Verfahren zum Verwalten von Zusatzfunktionen eines Werkzeugs.

Das Computerprogrammprodukt ist insbesondere auf einem Datenspeicher des Werkzeugs und/oder einem Datenspeicher der Funktionsverwaltungsvorrichtung gespeichert. Insbesondere umfasst das Computerprogrammprodukt ein Teilprogramm, das auf dem Datenspeicher des Werkzeugs gespeichert ist, und ein anderes Teilprogramm, das auf dem Datenspeicher der Funktionsverwaltungsvorrichtung gespeichert ist.

Die Aufgabe wird zudem gelöst durch ein System zur Verwaltung von Zusatzfunktionen eines Werkzeugs, wobei das System eine Funktionsverwaltungsvorrichtung und ein Werkzeug mit wenigstens einer Zusatzfunktion umfasst, wobei die Funktionsverwaltungsvorrichtung dazu eingerichtet ist, ein das Werkzeug individuell und eineindeutig bestimmendes Werkzeugkennzeichen und wenigstens ein Funktionskennzeichen, das wenigstens einer deaktivierten Zusatzfunktion zugeordnet ist, zu empfangen und einen Aktivierungsdatensatz an das Werkzeug zu übermitteln, wobei das Werkzeug dazu eingerichtet ist, die wenigstens eine deaktivierte Zusatzfunktion auf dem Werkzeug mittels des Aktivierungsdatensatzes zu aktivieren, wobei der Aktivierungsdatensatz hinsichtlich des Werkzeugs individualisiert ist, so dass die wenigstens eine Zusatzfunktion mittels des Aktivierungsdatensatzes ausschließlich auf dem Werkzeug aktivierbar ist, das dem Werkzeugkennzeichen eineindeutig zugeordnet ist.

Das System verkörpert die gleichen Vorteile, Merkmale und Eigenschaften wie das zuvor beschriebene Verfahren zum Verwalten von Zusatzfunktionen eines Werkzeugs, das zuvor beschriebene Werkzeug und das zuvor beschriebene Computerprogrammprodukt.

Vorzugsweise ist das Werkzeugkennzeichen eine Seriennummer des Werkzeugs.

Bevorzugt ist die Funktionsverwaltungsvorrichtung dazu eingerichtet, den Aktivierungsdatensatz drahtgebunden und/oder drahtlos an das Werkzeug zu übermitteln, wobei insbesondere das Werkzeug dazu eingerichtet ist, den Aktivierungsdatensatz drahtgebunden und/oder drahtlos zu empfangen.

Die Funktionsverwaltungsvorrichtung ist vorzugsweise dazu eingerichtet, die Zusatzfunktionen des Werkzeugs separat zu deaktivieren und/oder zu aktivieren.

Vorzugsweise ist die Funktionsverwaltungsvorrichtung ein externes Mobilgerät, insbesondere ein Mobiltelefon, oder ein externer, stationärer Computer.

Vorzugsweise ist das System dazu eingerichtet, eine Kontrolldatenverbindung zwischen der Funktionsverwaltungsvorrichtung und dem Werkzeug aufzubauen und aufrechtzuerhalten, solange sich die Funktionsverwaltungsvorrichtung innerhalb eines, insbesondere vorgebbaren, Abstands von dem Werkzeug befindet, wobei die Funktionsverwaltungsvorrichtung dazu eingerichtet ist, in regelmäßigen Intervallen über die Kontrolldatenverbindung ein Kontrollsignal an das Werkzeug zu übermitteln, wobei das Werkzeug dazu eingerichtet ist, die wenigstens eine Zusatzfunktion, die aktiviert wurde, zu deaktivieren, sofern innerhalb eines vorgebbaren Kontrollzeitraums kein Kontrollsignal an das Werkzeug übermittelt wurde.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Systems zum Verwalten von Zusatzfunktionen eines Werkzeugs,
- Fig. 2: eine schematisch vereinfacht dargestellte Liste von aktivierten und deaktivierten Zusatzfunktionen eines Werkzeugs und
- Fig. 3: eine schematisch vereinfachte Darstellung eines externen Mobilgeräts, das eine Datenverbindung mit einem Werkzeug aufrechterhält.

In den Zeichnungen sind jeweils gleiche oder gleichartige Elemente und/oder Teile mit denselben Bezugsziffern versehen, so dass von einer erneuten Vorstellung jeweils abgesehen wird.

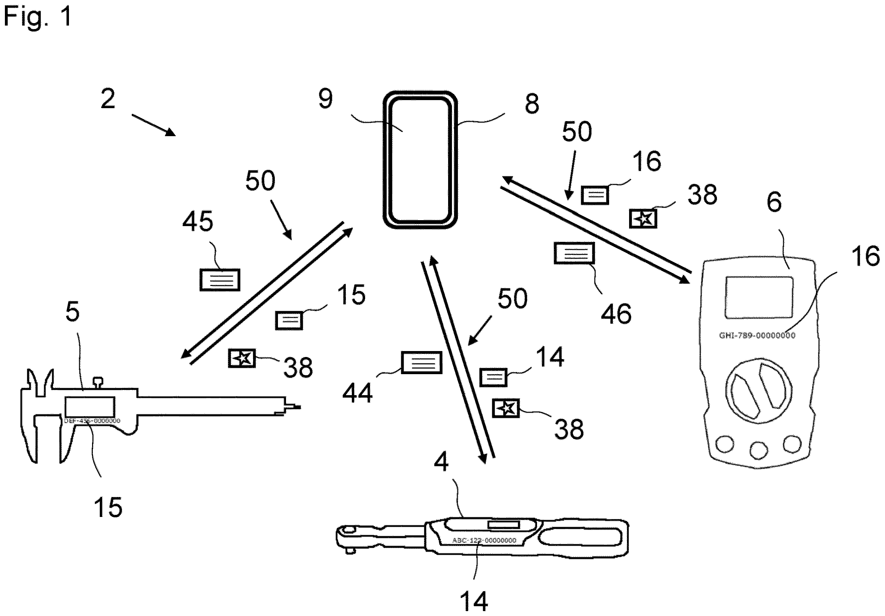

Fig. 1 zeigt schematisch vereinfacht ein System 2 zum Verwalten von Zusatzfunktionen von Werkzeugen 4, 5 und 6. Bei dem Werkzeug 4 handelt es sich in der beispielhaft gezeigten Ausführungsform des Systems 2 um einen elektronischen Drehmomentschlüssel, bei dem Werkzeug 5 um einen elektronischen Messschieber und bei dem Werkzeug 6 um ein Multimeter. Neben den Werkzeugen 4, 5, 6 umfasst das System 2 eine Funktionsverwaltungsvorrichtung 8, die in der gezeigten Ausführungsform als externes Mobilgerät 9 in Form eines Smartphones ausgebildet ist.

Die Werkzeuge 4, 5, 6 verfügen jeweils über eine Reihe von Zusatzfunktionen, beispielsweise die Anzeige von zusätzlichen Messwerten oder die Freischaltung von erweiterten Werte- und/oder Nutzungsbereichen. Die Zusatzfunktionen sind jedoch unter Umständen beim Kauf der Werkzeuge 4, 5, 6 deaktiviert, beispielsweise, da der Nutzer ein günstiges Modell der Werkzeuge 4, 5, 6 mit eingeschränktem Funktionsumfang erworben hat. Zu einem späteren Zeitpunkt stellt der Nutzer fest, dass er eine oder mehrere der deaktivierten Zusatzfunktionen benötigt. Das System 2 erlaubt es dem Nutzer nun, diese Zusatzfunktionen nachträglich auf den Werkzeugen 4, 5, 6 zu aktivieren.

Das Verfahren und das System 2 zum Verwalten von Zusatzfunktionen der Werkzeuge 4, 5, 6 sehen vor, dass ein das Werkzeug 4, 5, 6 individuell und eineindeutig bestimmendes Werkzeugkennzeichen 14, 15, 16 ermittelt wird. In der in Fig. 1 dargestellten Ausführungsform handelt es sich um eine Seriennummer des Werkzeugs 4, 5, 6, die dem Werkzeug 4, 5, 6 eindeutig zugeordnet ist und eine eindeutige Identifikation des Werkzeugs 4, 5, 6 erlaubt. Die Seriennummer wird beispielsweise vom Nutzer am Werkzeug 4, 5, 6 abgelesen. Das Werkzeugkennzeichen 14, 15, 16 wird zusammen mit einem Funktionskennzeichen 38, das die zu aktivierende Zusatzfunktion bzw. Zusatzfunktionen bestimmt, an die Funktionsverwaltungsvorrichtung 8 übermittelt. Beispielweise werden das Werkzeugkennzeichen 14, 15, 16 und/oder das Funktionskennzeichen 38 direkt an der Funktionsverwaltungsvorrichtung 8 eingegeben. Gemäß einer anderen Ausführungsform, die in Fig. 1 gezeigt ist, werden das Werkzeugkennzeichen 14, 15, 16 und das Funktionskennzeichen 38 über eine Datenverbindung 50 von dem Werkzeug 4, 5, 6 an die Funktionsverwaltungsvorrichtung 8 übermittelt. Gemäß einer weiteren Ausführungsform werden das Werkzeugkennzeichen 14, 15, 16 und das Funktionskennzeichen 38 an einer dritten Vorrichtung, beispielsweise einem Personalcomputer, eingegeben und von dort an die Funktionsverwaltungsvorrichtung 8 übermittelt.

Die Funktionsverwaltungsvorrichtung 8 prüft gemäß einer Ausführungsform, ob eine Berechtigung zur Freischaltung der Zusatzfunktionen vorliegt, zum Beispiel, ob eine kostenpflichtige Lizenz für die zu aktivierenden Zusatzfunktionen erworben wurde. Die Zahlung der Gebühren für die Lizenz kann beispielsweise direkt mit der Übermittlung der Werkzeugkennzeichen 14, 15, 16 und des Funktionskennzeichens 38 erfolgen. Anschließend erstellt die Funktionsverwaltungsvorrichtung 8 einen Aktivierungsdatensatz 44, 45, 46, ruft den Aktivierungsdatensatz 44, 45 46 von einem Datenspeicher ab oder fordert den Aktivierungsdatensatz 44, 45 46 von einer dritten Vorrichtung an. Der Aktivierungsdatensatz 44, 45, 46 wird an das jeweilige Werkzeug 4, 5, 6 übermittelt. Dies geschieht beispielsweise drahtlos über Bluetooth oder drahtgebunden mittels USB, beispielsweise über die Datenverbindung 50.

Die Aktivierungsdatensätze 44, 45, 46 sind jeweils hinsichtlich der Werkzeuge 4, 5, 6 individualisiert. Das heißt, dass mittels des Aktivierungsdatensatzes 44, 45, 46 die Zusatzfunktionen ausschließlich auf dem Werkzeug 4, 5, 6 aktivierbar sind, das dem Werkzeugkennzeichen 14, 15, 16 eineindeutig zugeordnet ist. Wird also beispielsweise der Aktivierungsdatensatz 44 kopiert und auf einem anderen elektronischen Drehmomentschlüssel vom gleichen Modell wie das Werkzeug 4 eingespielt, so lassen sich mittels des Aktivierungsdatensatzes 44 dennoch die Zusatzfunktionen nicht aktivieren. Auf diese Weise wird sichergestellt, dass tatsächlich nur auf den Werkzeugen 4, 5, 6 die Zusatzfunktionen freigeschaltet werden, für die eine Aktivierung angefordert und z.B. eine Lizenz erworben wurde. Gleichzeitig wird erreicht, dass die Aktivierungsdatensätze 44, 45, 46 schnell, einfach und sicher auf elektronischem Wege übermittelbar sind, ohne dass die Gefahr eines Missbrauchs besteht. Wäre der Aktivierungsdatensatz 44, 45, 46 nicht mittels des Werkzeugkennzeichens 14, 15, 16 individualisiert, wäre eine drahtgebundene oder drahtlose Übermittlung des Aktivierungsdatensatzes 44, 45, 46 immer mit der Gefahr verbunden, dass der Aktivierungsdatensatz 44, 45, 46 zweckentfremdet wird.

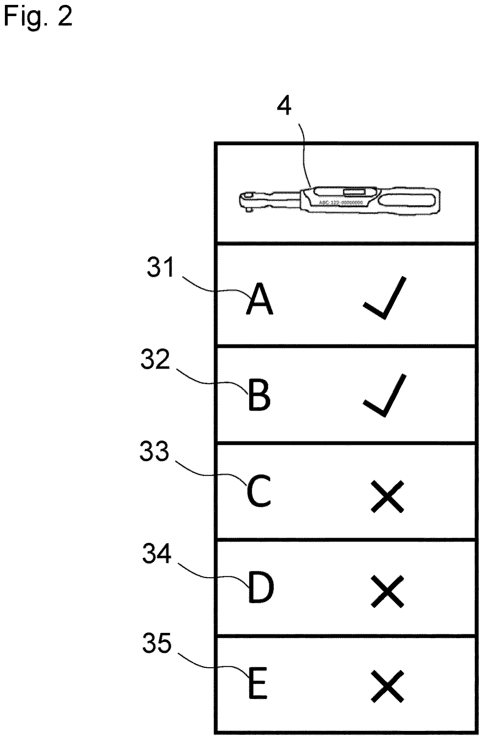

Fig. 2 zeigt schematisch vereinfacht eine Übersicht über die Zusatzfunktionen des Werkzeugs 4. In der gezeigten Ausführungsform hat der Drehmomentschlüssel 4 insgesamt fünf aktivierbare Zusatzfunktionen 31, 32, 33, 34 und 35. Von diesen Zusatzfunktionen sind momentan die Zusatzfunktionen 31 und 32 aktiviert, während die Zusatzfunktionen 33, 34 und 35 deaktiviert sind. Fig. 2 ist eine beispielhafte Darstellung einer Übersicht, die zum Beispiel auf einer Anzeige der Funktionsverwaltungsvorrichtung 8 anzeigbar ist.

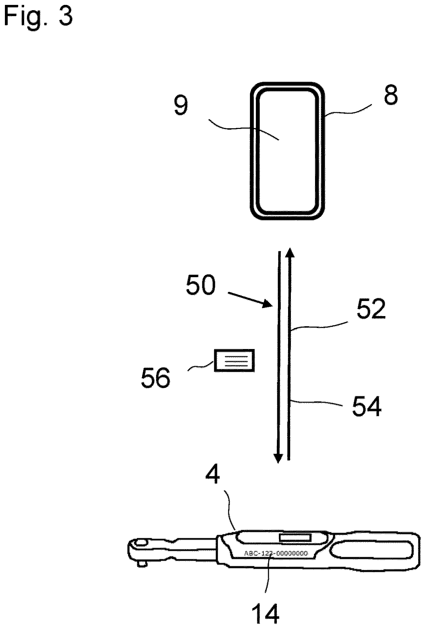

Fig. 3 zeigt schematisch vereinfacht eine Funktionsverwaltungsvorrichtung 8, die als externes Mobilgerät 9 ausgestaltet und über eine Datenverbindung 50 mit einem Werkzeug 4 verbunden ist. Bei der Datenverbindung 50 handelt es sich beispielsweise um eine Berechtigungsdatenverbindung 52 oder eine Kontrolldatenverbindung 54.

Die Berechtigungsdatenverbindung 52 wird aufgebaut, um eine Zusatzfunktion des Werkzeugs 4 nutzbar zu machen. So ist es beispielsweise vorgesehen, dass eine Zusatzfunktion zwar grundsätzlich aktiviert ist, aber nur genutzt werden kann, nachdem die Berechtigungsdatenverbindung 52 zwischen dem externen Mobilgerät 9 und dem Werkzeug 4 aufgebaut wurde. Dies erlaubt es dem Nutzer des externen Mobilgeräts 9, beispielsweise dem Meister eines Betriebes, zu kontrollieren, wann eine bestimmte Zusatzfunktion des Werkzeugs 4 durch die Mitarbeiter des Betriebs nutzbar ist.

Die Kontrolldatenverbindung 54 wird aufgebaut und aufrechterhalten, wenn sich das Werkzeug 4 innerhalb eines vorgebbaren Abstands um das externe Mobilgerät 9 befindet. Über die Kontrolldatenverbindung 54 wird in regelmäßigen Intervallen ein Kontrollsignal 56 an das Werkzeug 4 übermittelt. Eine bestimmte Zusatzfunktion des Werkzeugs 4 ist nur dann nutzbar, wenn innerhalb eines vorgebbaren Kontrollzeitraums ein Kontrollsignal 56 an das Werkzeug 4 übermittelt wurde. Somit ist die Zusatzfunktion solange nutzbar, wie sich das Werkzeug 4 innerhalb des vorgebbaren Abstands um das externe Mobilgerät 9 befindet. Auf diese Weise lässt sich eine Zusatzfunktion für das Werkzeug 4 freischalten, solange ein Nutzer das externe Mobilgerät 9 mit sich führt oder sich das externe Mobilgerät 9 innerhalb des gleichen Betriebs befindet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: System
- 4: Werkzeug
- 5: Werkzeug
- 6: Werkzeug
- 8: Funktionsverwaltungsvorrichtung
- 9: externes Mobilgerät
- 14: Werkzeugkennzeichen
- 15: Werkzeugkennzeichen
- 16: Werkzeugkennzeichen
- 31: Zusatzfunktionen
- 32: Zusatzfunktionen
- 33: Zusatzfunktionen
- 34: Zusatzfunktionen
- 35: Zusatzfunktionen
- 38: Funktionskennzeichen
- 44: Aktivierungsdatensatz
- 45: Aktivierungsdatensatz
- 46: Aktivierungsdatensatz
- 50: Datenverbindung
- 52: Berechtigungsdatenverbindung
- 54: Kontrolldatenverbindung
- 56: Kontrollsignal

## Patentansprüche

1. Verfahren zum Verwalten von Zusatzfunktionen (31, 32, 33, 34, 35) eines Werkzeugs (4, 5, 6), umfassend die folgenden Verfahrensschritte:
- Auswahl wenigstens einer deaktivierten Zusatzfunktion (31, 32, 33, 34, 35) des Werkzeugs (4, 5, 6) und Ermitteln wenigstens eines Funktionskennzeichens (38), das der wenigstens einen deaktivierten Zusatzfunktion (31, 32, 33, 34, 35) zugeordnet ist,
- Ermitteln eines das Werkzeug (4, 5, 6) individuell und eineindeutig bestimmenden Werkzeugkennzeichens (14, 15, 16),
- Übermitteln des Werkzeugkennzeichens (14, 15, 16) und des wenigstens einen Funktionskennzeichens (38) an eine Funktionsverwaltungsvorrichtung (8),
- Übermitteln eines Aktivierungsdatensatzes (44, 45, 46) von der Funktionsverwaltungsvorrichtung (8) an das Werkzeug (4, 5, 6),
- Aktivieren der wenigstens einen deaktivierten Zusatzfunktion (31, 32, 33, 34, 35) auf dem Werkzeug (4, 5, 6) mittels des Aktivierungsdatensatzes (44, 45, 46),
wobei der Aktivierungsdatensatz (44, 45, 46) hinsichtlich des Werkzeugs (4, 5, 6) individualisiert ist, so dass die wenigstens eine Zusatzfunktion (31, 32, 33, 34, 35) mittels des Aktivierungsdatensatzes (44, 45, 46) ausschließlich auf dem Werkzeug (4, 5, 6) aktivierbar ist, das dem Werkzeugkennzeichen (14, 15, 16) eineindeutig zugeordnet ist.

2. Verfahren nach Anspruch 1, **dadurch gekennzeichnet, dass** das Werkzeugkennzeichen (14, 15, 16) eine Seriennummer des Werkzeugs (4, 5, 6) ist und/oder dass der Aktivierungsdatensatz (44, 45, 46) drahtgebunden und/oder drahtlos an das Werkzeug (4, 5, 6) übermittelt wird.

3. Verfahren nach Anspruch 1 oder 2, **dadurch gekennzeichnet, dass** mittels der Funktionsverwaltungsvorrichtung (8) die Zusatzfunktionen (31, 32, 33, 34, 35) des Werkzeugs (4, 5, 6) separat deaktivierbar und/oder aktivierbar sind und/oder dass die Funktionsverwaltungsvorrichtung (8) ein externes Mobilgerät (9), insbesondere ein Mobiltelefon, oder ein externer, stationärer Computer ist.

4. Verfahren nach einem der Ansprüche 1 bis 3, **dadurch gekennzeichnet, dass** wenigstens eine der Zusatzfunktionen (31, 32, 33, 34, 35) nur nutzbar ist, nachdem eine Berechtigungsdatenverbindung (52) zwischen der Funktionsverwaltungsvorrichtung (8) und dem Werkzeug (4, 5, 6) hergestellt wurde.

5. Verfahren nach einem der Ansprüche 1 bis 4, **dadurch gekennzeichnet, dass** zwischen der Funktionsverwaltungsvorrichtung (8) und dem Werkzeug (4, 5, 6) eine Kontrolldatenverbindung (54) aufgebaut und aufrechterhalten wird, solange sich die Funktionsverwaltungsvorrichtung (8) innerhalb eines, insbesondere vorgebbaren, Abstands von dem Werkzeug (4, 5, 6) befindet, wobei in regelmäßigen Intervallen über die Kontrolldatenverbindung (54) ein Kontrollsignal (56) an das Werkzeug (4, 5, 6) übermittelt wird, wobei die wenigstens eine Zusatzfunktion (31, 32, 33, 34, 35), die aktiviert wurde, deaktiviert wird, sofern innerhalb eines vorgebbaren Kontrollzeitraums kein Kontrollsignal (56) an das Werkzeug (4, 5, 6) übermittelt wurde.

6. Verfahren nach einem der Ansprüche 1 bis 5, **dadurch gekennzeichnet, dass** mittels einer einzigen Funktionsverwaltungsvorrichtung (8) Zusatzfunktionen (31, 32, 33, 34, 35) von mehreren Werkzeugen (4, 5, 6) verwaltet werden.

7. Verfahren nach einem der Ansprüche 1 bis 6, **dadurch gekennzeichnet, dass** der Aktivierungsdatensatz (44, 45, 46) eine Aktivierungsdauer beinhaltet, wobei die wenigstens eine Zusatzfunktion (31, 32, 33, 34, 35), die aktiviert wurde, nach Ablauf der Aktivierungsdauer deaktiviert wird.

8. Verfahren nach einem der Ansprüche 1 bis 7, **dadurch gekennzeichnet, dass** das Werkzeug (4, 5, 6) ein handgeführtes elektronisches Messmittel ist, insbesondere ein elektronischer Drehmomentschlüssel und/oder eine Bügelmessschraube und/oder ein Messschieber und/oder eine Messuhr und/oder ein Rauheitsmessgerät.

9. Werkzeug (4, 5, 6), das dazu ausgebildet und eingerichtet ist, die von dem Werkzeug (4, 5, 6) ausgeführten Verfahrensschritte des Verfahrens nach einem der Patentansprüche 1 bis 8 auszuführen.

10. Computerprogrammprodukt, umfassend Befehle, die bei der Ausführung des Computerprogrammprodukts eine Datenverarbeitungsvorrichtung dazu veranlassen, das Verfahren nach einem der Ansprüche 1 bis 8 auszuführen.

11. System (2) zur Verwaltung von Zusatzfunktionen (31, 32, 33, 34, 35) eines Werkzeugs (4, 5, 6), wobei das System (2) eine Funktionsverwaltungsvorrichtung (8) und ein Werkzeug (4, 5, 6) mit wenigstens einer Zusatzfunktion (31, 32, 33, 34, 35) umfasst, wobei die Funktionsverwaltungsvorrichtung (8) dazu eingerichtet ist, ein das Werkzeug (4, 5, 6) individuell und eineindeutig bestimmendes Werkzeugkennzeichen (14, 15, 16) und wenigstens ein Funktionskennzeichen (38), das wenigstens einer ausgewählten deaktivierten Zusatzfunktion (31, 32, 33, 34, 35) zugeordnet ist, zu empfangen und einen Aktivierungsdatensatz (44, 45, 46) an das Werkzeug (4, 5, 6) zu übermitteln, wobei das Werkzeug (4, 5, 6) dazu eingerichtet ist, die wenigstens eine deaktivierte Zusatzfunktion (31, 32, 33, 34, 35) auf dem Werkzeug (4, 5, 6) mittels des Aktivierungsdatensatzes (44, 45, 46) zu aktivieren, wobei der Aktivierungsdatensatz (44, 45, 46) hinsichtlich des Werkzeugs (4, 5, 6) individualisiert ist, so dass die wenigstens eine Zusatzfunktion (31, 32, 33, 34, 35) mittels des Aktivierungsdatensatzes (44, 45, 46) ausschließlich auf dem Werkzeug (4, 5, 6) aktivierbar ist, das dem Werkzeugkennzeichen (14, 15, 16) eineindeutig zugeordnet ist.

12. System (2) nach Anspruch 11, **dadurch gekennzeichnet, dass** das Werkzeugkennzeichen (14, 15, 16) eine Seriennummer des Werkzeugs (4, 5, 6) ist und/oder dass die Funktionsverwaltungsvorrichtung (8) dazu eingerichtet ist, den Aktivierungsdatensatz (44, 45, 46) drahtgebunden und/oder drahtlos an das Werkzeug (4, 5, 6) zu übermitteln, wobei insbesondere das Werkzeug (4, 5, 6) dazu eingerichtet ist, den Aktivierungsdatensatz (44, 45, 46) drahtgebunden und/oder drahtlos zu empfangen.

13. System (2) nach Anspruch 11 oder 12, **dadurch gekennzeichnet, dass** die Funktionsverwaltungsvorrichtung (8) dazu eingerichtet ist, die Zusatzfunktionen (31, 32, 33, 34, 35) des Werkzeugs (4, 5, 6) separat zu deaktivieren und/oder zu aktivieren.

14. System (2) nach einem der Ansprüche 11 bis 13, **dadurch gekennzeichnet, dass** die Funktionsverwaltungsvorrichtung (8) ein externes Mobilgerät (9), insbesondere ein Mobiltelefon, oder ein externer, stationärer Computer ist.

15. System (2) nach einem der Ansprüche 11 bis 14, **dadurch gekennzeichnet, dass** das System (2) dazu eingerichtet ist, eine Kontrolldatenverbindung (54) zwischen der Funktionsverwaltungsvorrichtung (8) und dem Werkzeug (4, 5, 6) aufzubauen und aufrechtzuerhalten, solange sich die Funktionsverwaltungsvorrichtung (8) innerhalb eines, insbesondere vorgebbaren, Abstands von dem Werkzeug (4, 5, 6) befindet, wobei die Funktionsverwaltungsvorrichtung (8) dazu eingerichtet ist, in regelmäßigen Intervallen über die Kontrolldatenverbindung (54) ein Kontrollsignal (56) an das Werkzeug (4, 5, 6) zu übermitteln, wobei das Werkzeug (4, 5, 6) dazu eingerichtet ist, die wenigstens eine Zusatzfunktion (31, 32, 33, 34, 35), die aktiviert wurde, zu deaktivieren, sofern innerhalb eines vorgebbaren Kontrollzeitraums kein Kontrollsignal (56) an das Werkzeug (4, 5, 6) übermittelt wurde.

## Claims

1. A method for managing supplementary functions (31, 32, 33, 34, 35) of a tool (4, 5, 6), comprising the following method steps:
- selecting at least one deactivated supplementary function (31, 32, 33, 34, 35) of the tool (4, 5, 6) and determining at least one function identifier (38) that is assigned to the at least one deactivated supplementary function (31, 32, 33, 34, 35),
- determining a tool identifier (14, 15, 16) that individually and uniquely defines the tool (4, 5, 6),
- transmitting the tool identifier (14, 15, 16) and the at least one function identifier (38) to a function management device (8),
- transmitting an activation dataset (44, 45, 46) from the function management device (8) to the tool (4, 5, 6),
- activating the at least one deactivated supplementary function (31, 32, 33, 34, 35) on the tool (4, 5, 6) by means of the activation dataset (44, 45, 46),
wherein the activation dataset (44, 45, 46) is individualized with regard to the tool (4, 5, 6), such that the at least one supplementary function (31, 32, 33, 34, 35) can be activated by means of the activation dataset (44, 45, 46) exclusively on the tool (4, 5, 6) that is uniquely assigned to the tool identifier (14, 15, 16).

2. The method according to claim 1, **characterized in that** the tool identifier (14, 15, 16) is a serial number of the tool (4, 5, 6) and/or **in that** the activation dataset (44, 45, 46) is transmitted to the tool (4, 5, 6) by wire and/or wirelessly.

3. The method according to claim 1 or 2, **characterized in that** the supplementary functions (31, 32, 33, 34, 35) of the tool (4, 5, 6) can be deactivated and/or activated separately by means of the function management device (8) and/or **in that** the function management device (8) is an external mobile device (9), in particular a mobile telephone, or an external, stationary computer.

4. The method according to any one of claims 1 to 3, **characterized in that** at least one of the supplementary functions (31, 32, 33, 34, 35) is only usable after an authorization data connection (52) has been established between the function management device (8) and the tool (4, 5, 6).

5. The method according to any one of claims 1 to 4, **characterized in that** a control data connection (54) between the function management device (8) and the tool (4, 5, 6) is set up and maintained as long as the function management device (8) is within an, in particular specifiable, distance from the tool (4, 5, 6), wherein a control signal (56) is transmitted at regular intervals via the control data connection (54) to the tool (4, 5, 6), wherein the at least one supplementary function (31, 32, 33, 34, 35) that was activated is deactivated if no control signal (56) was transmitted to the tool (4, 5, 6) within a specifiable control period.

6. The method according to any one of claims 1 to 5, **characterized in that** supplementary functions (31, 32, 33, 34, 35) of multiple tools (4, 5, 6) are managed by means of a single function management device (8).

7. The method according to any one of claims 1 to 6, **characterized in that** the activation dataset (44, 45, 46) contains an activation time, wherein the at least one supplementary function (31, 32, 33, 34, 35) that was activated is deactivated after the activation time has elapsed.

8. The method according to any one of claims 1 to 7, **characterized in that** the tool (4, 5, 6) is a handheld electronic measuring means, in particular an electronic torque wrench and/or an outside micrometer and/or a caliper and/or a dial gauge and/or a roughness meter.

9. A tool (4, 5, 6) which is designed and configured to carry out the method steps, carried out by the tool (4, 5, 6), of the method according to any one of claims 1 to 8.

10. A computer program product comprising commands which, when the computer program product is executed, prompt a data processing device to carry out the method according to any one of claims 1 to 8.

11. A system (2) for managing supplementary functions (31, 32, 33, 34, 35) of a tool (4, 5, 6), wherein the system (2) comprises a function management device (8) and a tool (4, 5, 6) having at least one supplementary function (31, 32, 33, 34, 35), wherein the function management device (8) is configured to receive a tool identifier (14, 15, 16) that individually and uniquely defines the tool (4, 5, 6) and at least one function identifier (38) that is assigned to at least one selected deactivated supplementary function (31, 32, 33, 34, 35) and to transmit an activation dataset (44, 45, 46) to the tool (4, 5, 6), wherein the tool (4, 5, 6) is configured to activate the at least one deactivated supplementary function (31, 32, 33, 34, 35) on the tool (4, 5, 6) by means of the activation dataset (44, 45, 46), wherein the activation dataset (44, 45, 46) is individualized with regard to the tool (4, 5, 6), such that the at least one supplementary function (31, 32, 33, 34, 35) can be activated by means of the activation dataset (44, 45, 46) exclusively on the tool (4, 5, 6) that is uniquely assigned to the tool identifier (14, 15, 16).

12. The system (2) according to claim 11, **characterized in that** the tool identifier (14, 15, 16) is a serial number of the tool (4, 5, 6) and/or **in that** the function management device (8) is configured to transmit the activation dataset (44, 45, 46) to the tool (4, 5, 6) by wire and/or wirelessly, wherein the tool (4, 5, 6) is in particular configured to receive the activation dataset (44, 45, 46) by wire and/or wirelessly.

13. The system (2) according to claim 11 or 12, **characterized in that** the function management device (8) is configured to deactivate and/or activate the supplementary functions (31, 32, 33, 34, 35) of the tool (4, 5, 6) separately.

14. The system (2) according to any one of claims 11 to 13, **characterized in that** the function management device (8) is an external mobile device (9), in particular a mobile telephone, or an external, stationary computer.

15. The system (2) according to any one of claims 11 to 14, **characterized in that** the system (2) is configured to set up and maintain a control data connection (54) between the function management device (8) and the tool (4, 5, 6) as long as the function management device (8) is within an, in particular specifiable, distance from the tool (4, 5, 6), wherein the function management device (8) is configured to transmit a control signal (56) at regular intervals via the control data connection (54) to the tool (4, 5, 6), wherein the tool (4, 5, 6) is configured to deactivate the at least one supplementary function (31, 32, 33, 34, 35) that was activated if no control signal (56) was transmitted to the tool (4, 5, 6) within a specifiable control period.

## Revendications

1. Procédé de gestion de fonctions supplémentaires (31, 32, 33, 34, 35) d'un outil (4, 5, 6), comprenant les étapes de procédé suivantes :
- sélectionner au moins une fonction supplémentaire désactivée (31, 32, 33, 34, 35) de l'outil (4, 5, 6) et déterminer au moins un identificateur de fonction (38) qui est associé à ladite au moins une fonction supplémentaire désactivée (31, 32, 33, 34, 35),
- déterminer un identificateur d'outil (14, 15, 16) qui détermine l'outil (4, 5, 6) individuellement et de manière unique,
- transmettre l'identificateur d'outil (14, 15, 16) et ledit au moins un identificateur de fonction (38) à un dispositif (8) de gestion de fonctions,
- transmettre à l'outil (4, 5, 6) un ensemble de données d'activation (44, 45, 46) du dispositif (8) de gestion de fonctions,
- activer ladite au moins une fonction supplémentaire désactivée (31, 32, 33, 34, 35) sur l'outil (4, 5, 6) au moyen de l'ensemble de données d'activation (44, 45, 46),
l'ensemble de données d'activation (44, 45, 46) étant individualisé s'agissant de l'outil (4, 5, 6), de sorte que ladite au moins une fonction supplémentaire (31, 32, 33, 34, 35) est apte à être activée au moyen de l'ensemble de données d'activation (44, 45, 46) exclusivement sur l'outil (4, 5, 6) qui est associé de manière univoque à l'identificateur d'outil (14, 15, 16).

2. Procédé selon la revendication 1, **caractérisé en ce que** l'identificateur d'outil (14, 15, 16) est un numéro de série de l'outil (4, 5, 6) et/ou **en ce que** l'ensemble de données d'activation (44, 45, 46) est transmis à l'outil (4, 5, 6) par fil et/ou sans fil.

3. Procédé selon la revendication 1 ou la revendication 2, **caractérisé en ce qu'**au moyen du dispositif (8) de gestion de fonctions, les fonctions supplémentaires (31, 32, 33, 34, 35) de l'outil (4, 5, 6) sont aptes à être désactivées et/ou activées séparément, et/ou **en ce que** le dispositif (8) de gestion de fonctions est un appareil mobile externe (9), notamment un téléphone mobile, ou un ordinateur externe fixe.

4. Procédé selon l'une des revendications 1 à 3, **caractérisé en ce qu'**au moins une des fonctions supplémentaires (31, 32, 33, 34, 35) n'est utilisable qu'après qu'une connexion de données d'autorisation (52) ait été établie entre le dispositif (8) de gestion de fonctions et l'outil (4, 5, 6).

5. Procédé selon l'une des revendications 1 à 4, **caractérisé en ce qu'**une connexion (54) de données de commande est établie et maintenue entre le dispositif (8) de gestion de fonctions et l'outil (4, 5, 6) tant que le dispositif (8) de gestion de fonctions se trouve à l'intérieur d'une distance, en particulier prédéfinissable, de l'outil (4, 5, 6), un signal de commande (56) étant transmis à l'outil (4, 5, 6) à intervalles réguliers par l'intermédiaire de la connexion (54) de données de commande, ladite au moins une fonction supplémentaire (31, 32, 33, 34, 35) qui a été activée étant désactivée si aucun signal de commande (56) n'a été transmis à l'outil (4, 5, 6) dans un délai de commande prédéterminé.

6. Procédé selon l'une des revendications 1 à 5, **caractérisé en ce que** les fonctions supplémentaires (31, 32, 33, 34, 35) de plusieurs outils (4, 5, 6) sont gérées au moyen d'un unique dispositif (8) de gestion de fonctions.

7. Procédé selon l'une des revendications 1 à 6, **caractérisé en ce que** l'ensemble de données d'activation (44, 45, 46) comprend une durée d'activation, ladite au moins une fonction supplémentaire (31, 32, 33, 34, 35) qui a été activée étant désactivée après expiration de la durée d'activation.

8. Procédé selon l'une des revendications 1 à 7, **caractérisé en ce que** l'outil (4, 5, 6) est un moyen de mesure électronique portatif, notamment une clé dynamométrique électronique et/ou une vis micrométrique et/ou un pied à coulisse et/ou un comparateur et/ou un appareil de mesure de rugosité.

9. Outil (4, 5, 6), conçu et agencé pour mettre en oeuvre les étapes du procédé selon l'une des revendications 1 à 8, mises en oeuvre par l'outil (4, 5, 6).

10. Produit de programme d'ordinateur comprenant des instructions qui, lors de l'exécution du produit de programme d'ordinateur, amènent un dispositif de traitement de données à mettre en oeuvre le procédé selon l'une des revendications 1 à 8.

11. Système (2) de gestion de fonctions supplémentaires (31, 32, 33, 34, 35) d'un outil (4, 5, 6), le système (2) comprenant un dispositif (8) de gestion de fonctions et un outil (4, 5, 6) ayant au moins une fonction supplémentaire (31, 32, 33, 34, 35), le dispositif (8) de gestion de fonctions étant agencé pour recevoir un identificateur d'outil (14, 15, 16) qui détermine l'outil (4, 5, 6) individuellement et de manière unique et au moins un identificateur de fonction (38) qui est associé à au moins une fonction supplémentaire désactivée sélectionnée (31, 32, 33, 34, 35), et pour transmettre un ensemble de données d'activation (44, 45, 46) à l'outil (4, 5, 6), l'outil (4, 5, 6) étant conçu pour activer ladite au moins une fonction supplémentaire désactivée (31, 32, 33, 34, 35) sur l'outil (4, 5, 6) au moyen de l'ensemble de données d'activation (44, 45, 46), l'ensemble de données d'activation (44, 45, 46) étant individualisé s'agissant de l'outil (4, 5, 6), de sorte que ladite au moins une fonction supplémentaire (31, 32, 33, 34, 35) est apte à être activée au moyen de l'ensemble de données d'activation (44, 45, 46) exclusivement sur l'outil (4, 5, 6) qui est associé de manière unique à l'identificateur d'outil (14, 15, 16).

12. Système (2) selon la revendication 11, **caractérisé en ce que** l'identificateur d'outil (14, 15, 16) est un numéro de série de l'outil (4, 5, 6) et/ou **en ce que** le dispositif (8) de gestion de fonctions est conçu de façon à transmettre l'ensemble de données d'activation (44, 45, 46) à l'outil (4, 5, 6) par fil et/ou sans fil, l'outil (4) étant notamment agencé de façon à recevoir l'ensemble de données d'activation (44, 45) par fil et/ou sans fil.

13. Système (2) selon la revendication 11 ou la revendication 12, **caractérisé en ce que** le dispositif (8) de gestion de fonctions est agencé de façon à désactiver et/ou activer séparément les fonctions supplémentaires (31, 32, 33, 34, 35) de l'outil (4, 5, 6).

14. Système (2) selon l'une des revendications 11 à 13, **caractérisé en ce que** le dispositif (8) de gestion de fonctions est un appareil mobile externe (9), notamment un téléphone mobile, ou un ordinateur externe fixe.

15. Système (2) selon l'une des revendications 11 à 14, **caractérisé en ce que** le système (2) est agencé de façon à établir et maintenir une connexion (54) de données de commande entre le dispositif (8) de gestion de fonctions et l'outil (4, 5, 6) tant que le dispositif (8) de gestion de fonctions se trouve à l'intérieur d'une distance, notamment prédéterminable, de l'outil (4, 5, 6), le dispositif (8) de gestion de fonctions étant agencé pour, transmettre à intervalles réguliers un signal de commande (56) à l'outil (4, 5, 6) via la connexion (54) de données de commande, l'outil (4, 5, 6) étant conçu pour désactiver ladite au moins une fonction supplémentaire (31, 32, 33, 34, 35) qui a été activée, si aucun signal de commande (56) n'a été transmis à l'outil (4, 5, 6) pendant une période de commande prédéterminable.
